# FASCICULE DE BREVET EUROPEEN

(11) **EP 3 116 725 B1**
(45) Date de publication et mention de la délivrance du brevet: **09.10.2019**
(21) Numéro de dépôt: 15708242.1
(22) Date de dépôt: 09.03.2015
(51) Int. Cl.: B60C 11/13, B60C 11/03

(54) **BANDE DE ROULEMENT COMPORTANT UNE TEXTURE A FORT CONTRASTE DANS UNE RAINURE**
LAUFFLÄCHE MIT EINER TEXTUR MIT HOHEM KONTRAST IN EINER NUT
TREAD COMPRISING A STRONG-CONTRAST TEXTURE IN A GROOVE

(30) Priorité: 10.03.2014 FR 1451916
(43) Date de publication de la demande: 18.01.2017
(73) Titulaire: Compagnie Générale des Etablissements Michelin, 63000 Clermont-Ferrand (FR)
(72) Inventeur: CAMBON, Stéphanie, F-63040 Clermont-Ferrand Cedex 9 (FR); LEJEUNE, Jonathan, F-63040 Clermont-Ferrand Cedex 9 (FR)
(74) Mandataire: Demaure, Pierre-Yves
(86) Numéro de dépôt international: PCT/EP2015/054845
(87) Numéro de publication internationale: WO 2015/135877

(56) Documents cités:
- WO-A1-2011/101495
- WO-A1-2012/148406
- US-A1- 2011 125 465

## Description

### DOMAINE DE L'INVENTION

La présente invention concerne une bande de roulement pour pneumatique, ladite bande de roulement comportant une surface de roulement et une pluralité de rainures.

L'invention concerne également un pneumatique comprenant une telle bande de roulement.

### ETAT DE LA TECHNIQUE

Afin de mouler la bande de roulement d'un pneumatique, il est connu d'utiliser des éléments moulants fixés dans un moule. Par élément moulant, on entend tout élément du moule qui comporte une surface de moulage permettant de mouler une partie de la bande de roulement d'un pneumatique. Un élément moulant peut être ainsi un bloc assemblé sur un secteur du moule ou bien un cordon rapporté sur la surface radialement intérieure du moule.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre sont ensuite agglomérés par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

Un tel objet fritté est notamment représenté à la **figure 3** du document EP0868955. Sur cette figure, on distingue aisément la structure en strates de l'objet fritté qui est un élément moulé destiné à être rapporté dans un moule pour pneumatique. Or cette structure en strates fait apparaître dans les rainures de la bande de roulement des lignes de niveau qui sont le reflet de cette structure. Ce phénomène de lignes de niveau est augmenté par le caractère curviligne du moule. Ces lignes de niveau donnent au pneumatique un aspect peu esthétique.

Le document WO 2011/039194 divulgue un pneumatique comprenant une bande de roulement pourvue d'une pluralité de rainures. Chaque rainure présente, vue en coupe, une forme globalement ondulée avec des parties de rainures entièrement ouvertes sur la surface de la bande de roulement et des parties de rainures fermées.

Le document US2011/0125465 divulgue un pneumatique comprenant une structure de bande de roulement destinée à améliorer l'évacuation de la boue et de la terre.

Il existe un besoin de proposer une solution permettant l'utilisation du procédé de frittage laser pour fabriquer le moule servant à mouler un pneumatique pourvue de rainures ondulées, tout en essayant d'améliorer l'esthétisme de ce pneumatique.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « texture », on entend un ensemble d'éléments organisés.

Par « flanc » d'un pneumatique, on entend une surface latérale du pneumatique disposée entre la bande de roulement du pneumatique et un bourrelet de ce pneumatique.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

### RESUME DE L'INVENTION

L'invention concerne une bande de roulement pour pneumatique, ladite bande de roulement comportant une surface de roulement et une pluralité de rainures, au moins une rainure présentant, vue en coupe, une forme globalement ondulée avec des parties de rainures entièrement ouvertes sur la surface de roulement et des parties de rainure fermées en tout ou partie sur ladite surface de roulement. Les parties de rainures ouvertes comprennent une texture faisant contraste dans la bande de roulement, la texture comportant une pluralité d'éléments en protubérance ou en creux par rapport à la surface de la rainure. La texture est absente des parties de rainure fermées.

La texture permet de créer un contraste visuel avec les parties de bande de roulement dépourvues de cette texture. Dans le cas où la texture est présente dans une rainure, ce contraste visuel accentue la profondeur de cette rainure vis-à-vis d'un observateur du pneumatique. En outre, en utilisant une texture dans les parties ouvertes de la rainure, on masque, la présence de lignes de niveau dans cette rainure. A partir d'un certain état d'usure de la bande de roulement, les parties de rainures fermées de la rainure s'ouvrent. En ne couvrant pas ces parties de rainure fermées avec la texture, on indique visuellement à l'observateur qu'il a atteint un niveau d'usure intermédiaire de la bande de roulement. A ce niveau d'usure, les canaux cachés s'ouvrent sur la surface de la bande de roulement, et cette bande de roulement entre alors dans une autre phase de fonctionnement.

Dans un mode de réalisation non limitatif, au moins 30% des éléments en protubérance de la texture fait un angle α supérieur à 40° par rapport à un plan tangent à la surface de la rainure et au plus 25% des éléments en protubérance de la texture fait un angle α inférieur à 20° par rapport au plan tangent.

On améliore ainsi davantage la capacité de la texture à piéger la lumière.

Dans un mode de réalisation non limitatif, tout ou partie des éléments en protubérance sont des brins répartis dans la texture selon une densité au moins égale à un brin par millimètre carré (mm²), chaque brin ayant une section moyenne comprise entre 0,003 mm² et 1 mm².

Dans un autre mode de réalisation non limitatif, tout ou partie des éléments en protubérance sont des lamelles sensiblement parallèles entre elles, le pas des lamelles dans la texture étant au plus égal à 0,5 mm, chaque lamelle ayant une largeur moyenne comprise entre 0,03 mm et 0,25 mm.

Dans un autre mode de réalisation non limitatif, tout ou partie des éléments en protubérance forme des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm.

Dans un autre mode de réalisation non limitatif, les éléments en protubérance présentent dans la texture des formes et des distances entre éléments en protubérances variables.

Dans un mode de réalisation non limitatif, les éléments en creux forment des ouvertures sur la surface de la rainure et la texture comprend une pluralité d'ouvertures, ces ouvertures étant réparties dans la texture selon une densité au moins égale à une ouverture par millimètre carré (mm²), ces ouvertures présentant des diamètres équivalents compris entre 0,03 mm et 1,2 mm.

La texture présente ainsi une grande pérennité. En effet, comme cette texture est composée d'éléments en creux par rapport à la surface de la rainure, l'impact de frottements avec des cailloux sur cette texture est faible.

Il est également proposé un pneumatique comprenant une bande de roulement selon l'une quelconque des caractéristiques précédentes.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'une partie d'un pneumatique comportant une bande de roulement conforme à l'art antérieur ;
- la **figure 2** représente schématiquement une vue en coupe de la bande de roulement d'un pneumatique, ladite bande de roulement comportant une rainure avec une texture conforme à l'invention ;
- la **figure 3** représente schématiquement une vue en coupe d'une rainure de la bande de roulement de la **figure 2** avec la texture particulière ;
- la **figure 4** représente une partie de la texture de la **figure 2****,** selon un premier mode de réalisation de l'invention ;
- la **figure 5** représente une partie de la texture de la **figure 2****,** selon un second mode de réalisation de l'invention ;
- la **figure 6** représente une partie de la texture de la **figure 2****,** selon un troisième mode de réalisation de l'invention ;
- la **figure 7** représente une partie de la texture de la **figure 2****,** selon un quatrième mode de réalisation de l'invention ;
- la **figure 8** représente une partie de la texture de la **figure 2****,** selon un cinquième mode de réalisation de l'invention ; et
- la **figure 9** représente une vue agrandie d'une cavité d'un élément en creux de la texture de la **figure 8****.**

Dans la description qui va suivre, des éléments sensiblement identiques ou similaires seront désignés par des références identiques.

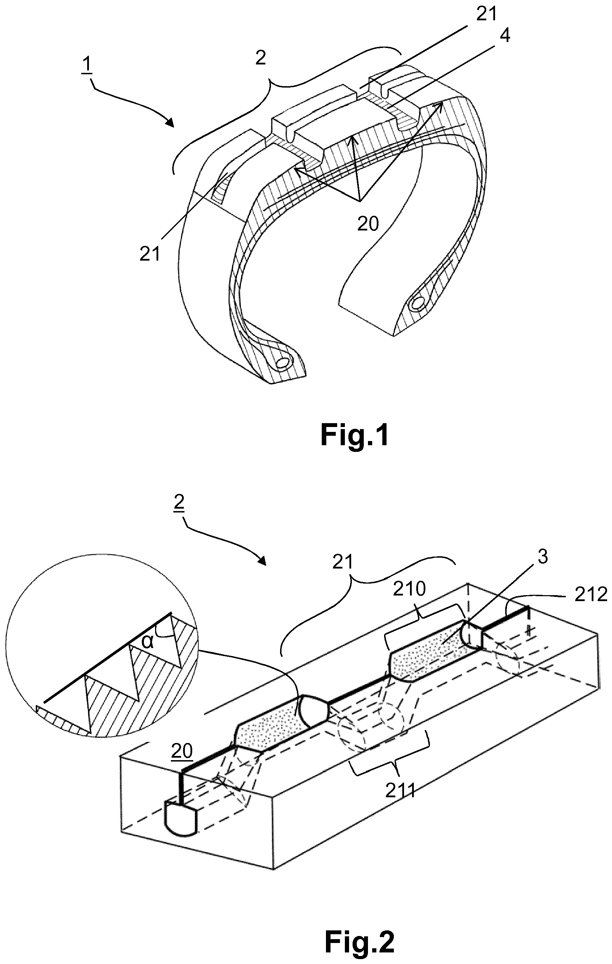

La **figure 1** représente une partie du pneumatique 1 comportant une bande de roulement 2 selon l'art antérieur. Comme on peut le voir, la bande de roulement 2 comporte une surface de roulement 20 et des rainures 21. La surface de roulement 20 (appelée également zone utile) est destinée à entrer en contact avec une chaussée lorsque le pneumatique 1 roule. Les rainures 21 (appelées également sculptures) permettent notamment d'évacuer l'eau et améliorent ainsi l'adhérence du pneumatique 1 sur une chaussée mouillée. En raison du procédé de frittage laser utilisé, les rainures comportent des lignes de niveau 4. Dans l'exemple illustré, les lignes de niveau se trouvent notamment dans le fond de rainure.

La **figure 2** représente une vue en coupe de la bande de roulement 2 d'un pneumatique 1, selon un mode de réalisation non limitatif de l'invention. La bande de roulement 2 comporte une surface de roulement 20 et des rainures 21. Dans un mode de réalisation non limitatif, au moins une rainure 21 comporte une forme globalement ondulée dans la profondeur de la bande de roulement 2. Dans un autre mode de réalisation non limitatif, chaque rainure 21 comporte une forme globalement ondulée dans la profondeur de la bande de roulement 2.

Tel qu'illustré, une rainure 21 comporte une surface et présente, vue en coupe, une forme globalement ondulée avec des parties de rainures entièrement ouvertes 210 sur la surface de roulement 20 et des parties de rainure fermées 211 en tout ou partie sur cette surface de roulement 20. Les parties de rainures ouvertes 210 comprennent une texture 3 faisant contraste dans la bande de roulement. Les parties de rainure ouvertes (ou externes) 210 débouchent sur la surface de roulement 20 lorsque le pneumatique 1 est à l'état neuf, tandis que les parties de rainure fermées (ou internes) 211 se trouvent à l'intérieur de la bande de roulement 2, dans sa profondeur (c'est-à-dire sous la surface de roulement 20) lorsque le pneumatique 1 est à l'état neuf. Lorsque la bande de roulement 2 s'use, à un certain niveau d'usure, ces parties fermées 211 débouchent sur la surface de roulement 20.

On notera que les parties de rainure fermées 211 sont fermées sur tout ou partie de la surface de roulement 20. En effet, lesdites rainures 211 comportent une fente 212 qui s'étend dans la profondeur de la bande de roulement 2 et débouche sur la surface de roulement 20, tel qu'illustré sur la **figure 2****.** Cette fente correspond à une lamelle dans le négatif de moulage d'une rainure.

Dans un mode de réalisation non limitatif, la texture 3 est absente des parties de rainure fermées 211, tel qu'illustré sur le mode de réalisation non limitatif de la **figure 2****.**

Ainsi, le fait d'utiliser la texture 3 uniquement dans les parties de rainure qui sont ouvertes 210 sur la surface de roulement 20 permet de masquer, à l'état neuf, la présence de lignes de niveau dans cette rainure. En effet, à un certain niveau d'usure, les parties fermées 211 vont être à découverts et les lignes de niveau sur ces parties fermées seront alors visibles par un observateur du pneumatique.

Cela permet à un observateur de faire la différence au niveau visuel entre les parties de rainures ouvertes 210 (qui apparaissent plus sombres) et les parties de rainure fermées 211 (qui apparaissent plus claires) lorsque la bande de roulement est usée et découvre les parties de rainures fermées 211. L'observateur perçoit bien que son pneumatique 1 est usé.

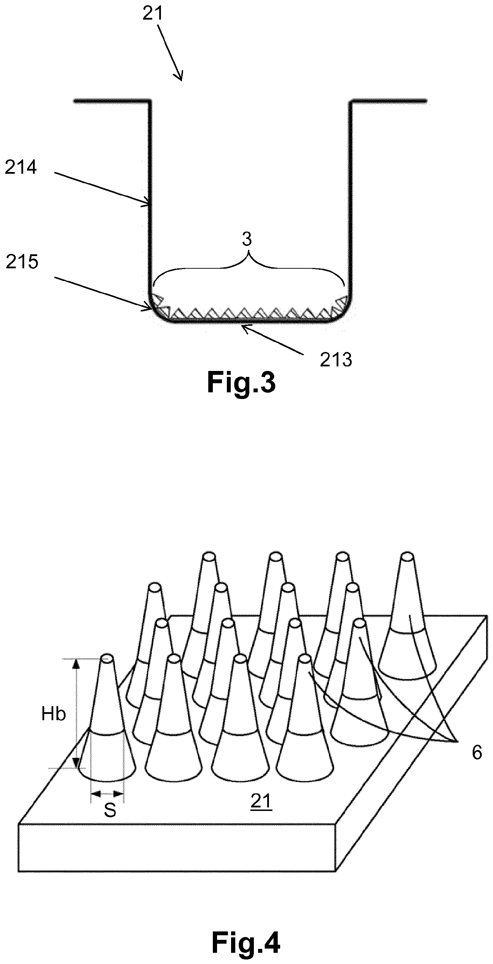

La **figure 3** illustre une vue en coupe d'une rainure 21. Une rainure 21 présente un fond de rainure 213, des parois 214 encadrant le fond de rainure et des zones de transition 215 (appelées également zones de raccord) entre les parois 214 et le fond de rainure 213, ces zones de transition 215 étant courbes et de rayon de l'ordre de 1mm dans un exemple non limitatif. On notera que la texture 3 est illustrée schématiquement dans une rainure 21 sur le fond 213 et sur les zones de transition 215 dans un exemple non limitatif, en vue zoomée. On notera également que la paroi 214 est ici représentée comme s'étendant perpendiculairement par rapport au fond 213 de la rainure. En variante, cette paroi 214 peut présenter un angle différent de 90° par rapport au fond 213.

Dans un premier mode de réalisation non limitatif illustré à la **figure 3****,** tout ou partie des rainures 21 comprennent une texture 3 s'étendant uniquement sur le fond 213 de rainure et sur au moins une partie des zones de transition 215 associées à ce fond de rainure, ladite texture 3 faisant contraste avec le reste du pneumatique 2. Par au moins une partie d'une zone de transition 215, on entend que la texture s'étend sur au moins 25% de la surface de cette zone de transition 215. La texture 3 ne s'étend pas sur les parois 214. Elle est ainsi absente des parois 214. Ce premier mode masque les lignes de niveau se trouvant dans le fond 213 et sur les zones de transition 215 des rainures 21. Ces lignes de niveau sur le fond sont en effet particulièrement visibles pour un observateur du pneumatique.

Dans un deuxième mode de réalisation non limitatif illustré à la **figure 2****,** tout ou partie des rainures 21 comprennent une texture 3 s'étendant sur tout l'intérieur des rainures 21, à savoir sur le fond 213 de rainure, sur les zones de transition 215 associées à ce fond de rainure et sur les parois 214 de la rainure, ladite texture 3 faisant contraste avec le reste du pneumatique 2.

La texture 3 permet ainsi de cacher les lignes de niveau. Par ailleurs, le fait que la texture 3 soit disposée dans les rainures 21 permet d'offrir une plus grande pérennité à ladite texture 3. En effet, l'impact des agressions mécaniques sur la texture, tels que des frottements avec des cailloux, est faible.

Selon un premier mode de réalisation non limitatif de la texture 3, la texture 3 comprend une pluralité d'éléments en protubérance par rapport à la surface de la rainure. L'effet de ces éléments en protubérance est de « piéger » une grande quantité des rayons lumineux incidents qui rencontrent la texture 3. Dans ce premier mode de réalisation, la texture 3 (appelée « velours ») permet d'obtenir un visuel de type « velours » car les éléments en protubérance absorbent la lumière et rendent ainsi les rainures 21 plus noires. De par leur structure et du fait de leur « encastrement » dans les rainures 21, ces éléments en protubérance permettent par ailleurs d'évacuer plus facilement l'eau, la boue et les poussières hors des rainures 21.

Selon une variante de réalisation non limitative, au moins 30% des éléments en protubérance de la texture 3 fait un angle α supérieur à 40° par rapport à un plan tangent X à la surface d'une rainure 21 (surface du fond 213, surface des zones de transition 215, surface des parois 214) et au plus 25% des éléments en protubérance de la texture fait un angle α inférieur à 20° par rapport au plan tangent X. Sur la partie en zoom de la texture 3 de la **figure 2** sont illustrés schématiquement les éléments en protubérance, ledit plan tangent X et ledit angle a. On notera que l'angle α est l'angle entre le plan tangent X et le côté des éléments en protubérance. Cette variante s'applique pour les éléments en protubérance 6 et 7 décrits ci-après.

La **figure 4** illustre la texture 3 selon une première variante de réalisation non limitative du premier mode de réalisation. Dans cette variante, tout ou partie des éléments en protubérance sont des brins 6 répartis dans la texture 3 selon une densité au moins égale à un brin par millimètre carré (mm²), chaque brin ayant une section moyenne S comprise entre 0,003 mm² et 1 mm². On notera que la section moyenne de chaque brin correspond à la moyenne des sections S mesurées à intervalles réguliers depuis la base du brin. Les brins 6 ont une forme globalement conique avec une section diminuant dans la hauteur Hb de ces brins.

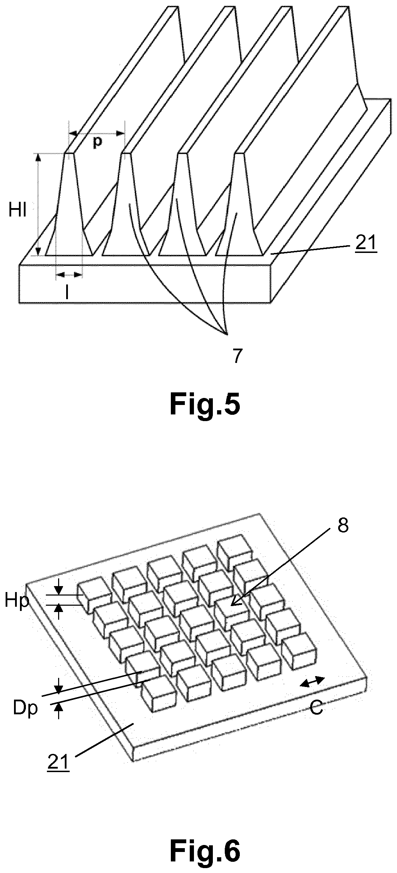

La **figure 5** illustre la texture 3 selon une deuxième variante de réalisation non limitative du premier mode de réalisation. Dans cette variante, tout ou partie des éléments en protubérance sont des lamelles 7 sensiblement parallèles entre elles, le pas P des lamelles dans la texture étant compris entre 0,1 mm et 0,5 mm, chaque lamelle 7 ayant une largeur moyenne comprise entre 0,03 mm et 0,25 mm. On notera que la largeur moyenne correspond à la moyenne des largeurs 1 mesurées à intervalles réguliers dans la hauteur Hl de la lamelle, la hauteur de chaque lamelle étant comprise entre 0,05 et 0,5mm.

Dans une autre variante de réalisation, la texture comporte une combinaison de brins 6 et de lamelles 7.

La **figure 6** illustre la texture 3 selon une troisième variante de réalisation non limitative du premier mode de réalisation. Dans cette variante, tout ou partie des éléments en protubérance forme des parallélépipèdes 8 de côté C compris entre 0,05 mm et 0,5 mm, de hauteur Hp comprise entre 0,05 mm et 0,5 mm, la distance Dp entre deux parallélépipèdes adjacents 8 dans la texture étant comprise entre 0,05 mm et 0.5 mm.

Dans une autre variante de réalisation, la texture comporte une combinaison des éléments en relief 6, 7 et 8, ou 6 et 8, ou encore 7 et 8 décrits ci-dessus.

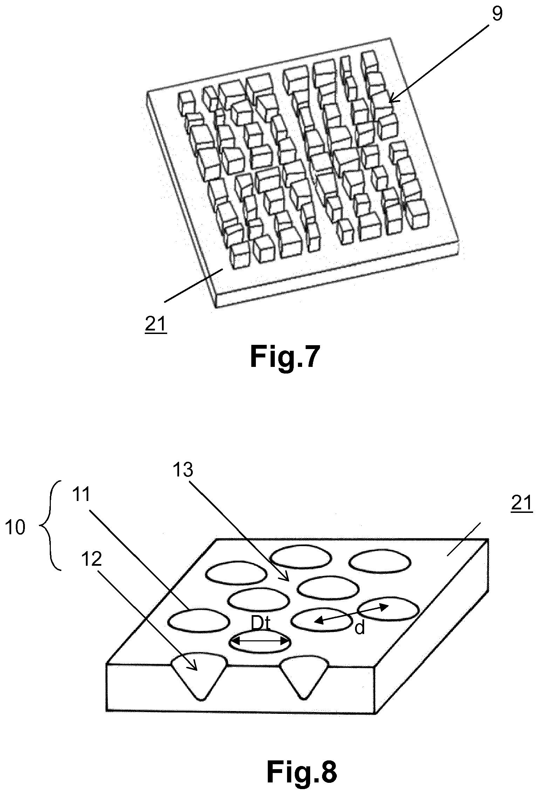

La **figure 7** illustre la texture 3 selon une quatrième variante de réalisation non limitative du premier mode de réalisation. Dans cette variante, les éléments en protubérance 9 présentent dans la texture 3 des formes et des distances entre éléments en protubérance variables. Cette variante permet d'améliorer le rendu esthétique de la texture 3.

Selon un deuxième mode de réalisation non limitatif de la texture 3, la texture 3 comprend une pluralité d'éléments en creux 10 (appelés également trous) par rapport à la surface des rainures 21 (surface du fond 213, surface des zones de transition 215, surface des parois 214). Les éléments en creux 10 sont composés d'ouvertures 11 sur la surface des rainures, et de cavités associées 12 s'étendant dans la profondeur des rainures.

Ainsi, la texture 3 comporte une pluralité d'ouvertures 11 dans la surface de rainure, lesdites ouvertures 11 étant réparties dans la texture 3 selon une densité au moins égale à une ouverture par millimètre carré (mm²) et présentant (sur la surface de rainures) des diamètres Dt équivalents compris entre 0,03 mm et 1,2 mm.

Dans un mode de réalisation non limitatif, les ouvertures 11 occupent au moins 30% de la texture 3.

Selon d'autres modes de réalisation non limitatifs, les ouvertures 11 occupent au moins 50% de la texture 3, voire plus de 70%. On notera que plus le taux d'occupation des ouvertures sur la texture est important, meilleur est le masquage des lignes de niveau issues du procédé de moulage, et meilleure est la qualité de contraste de cette texture par rapport au reste de la bande de roulement (notamment par rapport à la surface de roulement).

Les ouvertures 11 se prolongent dans la profondeur des rainures 21 pour former des cavités 12.

L'effet de ces cavités 12 est de « piéger » une grande quantité des rayons lumineux incidents qui rencontrent la texture 3. En effet, comme les cavités 12 sont en creux dans la rainure 21, l'impact des agressions mécaniques sur la texture, tels que des frottements avec des cailloux est plus faible que pour des protubérances. Dans ce deuxième mode de réalisation, la texture 3 (appelée « velours ») permet d'obtenir un visuel de type « velours » car les cavités absorbent la lumière et rendent ainsi les rainures 21 plus noires. L'effet visuel des rainures est amélioré.

Dans un mode de réalisation non limitatif, tout ou partie des cavités 12 a une profondeur au moins égale à 0.1mm. Dans une variante de réalisation non limitative, tout ou partie des cavités 12 a une profondeur comprise entre 0.2 mm et 0.6 mm. De cette manière, on s'assure qu'une grande quantité de rayons lumineux incidents qui rencontre la texture 3 est piégée par ladite texture et, comme la profondeur des cavités est limitée, on évite également de trop dégrader la résistance mécanique des rainures 21.

La **figure 8** illustre la texture 3 selon une première variante non limitative de ce deuxième mode de réalisation. Dans cette variante, tout ou partie des cavités 12 sont en forme de cônes qui s'étendent dans la profondeur de la rainure 21 et débouchent sur la surface de la rainure 21 en formant des ouvertures circulaires 11. Les cavités 12 ont ainsi une section qui diminue dans la profondeur. De cette manière, on améliore le contraste de la texture 3 et donc de la rainure 21 par rapport au reste de la bande de roulement 2. On notera que dans cette variante, les ouvertures 11 des cavités 12 ne se touchent pas. Les ouvertures 11 sont séparées par des zones intermédiaires 13. En outre, les ouvertures 11 sont régulièrement réparties sur la surface de la rainure 21 de sorte que la distance d entre chaque ouverture de la texture 3 est globalement similaire.

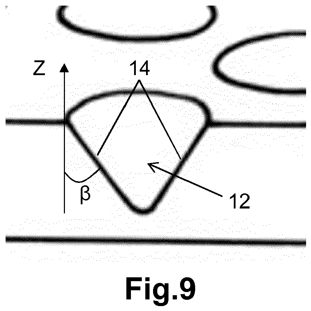

La **figure 9** est un zoom sur une cavité 12 d'un élément en creux 10 de la texture de la **figure 8****.** Dans un mode de réalisation non limitatif, tout ou partie des cavités a au moins une paroi 14 qui, selon une vue en coupe, forme un angle β compris entre 10° et 60°, par rapport à une direction Z perpendiculaire à la texture 3.

A chaque fois qu'un rayon lumineux rencontre une paroi 14 de la cavité 12, celui-ci est réfléchi par ladite paroi 14. La direction de réflexion du rayon lumineux dépend de la direction initiale de ce rayon lumineux et de l'angle d'inclinaison de la paroi 14. Ainsi, en fonction de cette direction initiale et de cet angle d'inclinaison, le rayon lumineux peut être renvoyé vers une autre paroi 14 de la cavité. A l'inverse, le rayon lumineux peut être renvoyé à l'extérieur de la cavité, par exemple directement vers un observateur. Dans le premier cas, le rayon lumineux « se perd » dans la cavité et il ne sera plus perceptible par l'oeil d'un observateur. Dans le second cas, l'observateur peut percevoir le rayon lumineux et la texture peut apparaître alors comme étant plus claire et donc moins en contraste vis-à-vis du reste de la bande de roulement. En choisissant une cavité 12 ayant au moins une paroi 14 qui forme un angle β compris entre 10° et 60°, on s'assure qu'une grande partie des rayons lumineux rentrant dans la cavité 12 va être absorbée par cette cavité sous l'effet de réflexions multiples à l'intérieur de la cavité. De cette manière, on améliore le contraste de la texture 3 (et notamment des rainures 21) par rapport au reste du pneumatique (notamment par rapport au flanc ou par rapport à la surface de roulement), tout en conservant le même taux d'occupation des cavités dans la texture. En outre, avec cette inclinaison de paroi, on améliore globalement la résistance de la texture, notamment lors de frottements répétés avec des cailloux.

Ainsi, la bande de roulement 2 décrite est adaptée pour s'intégrer dans un pneumatique 1 en matériau caoutchoutique pour véhicule automobile. Par véhicule automobile, on entend tout type de véhicule motorisé, tel que des voitures ou des poids lourds.

Le pneumatique 1 comprend ainsi une bande de roulement 2, ladite bande de roulement 2 comportant une surface de roulement 20 et une pluralité de rainures 21, au moins une rainure présentant, vue en coupe, une forme globalement ondulée avec des parties de rainures entièrement ouvertes 210 sur la surface de roulement 20 et des parties de rainure fermées 211 en tout ou partie sur ladite surface de roulement 20. Les parties de rainures ouvertes 210 comprennent une texture 3 faisant contraste dans la bande de roulement, la texture 3 comportant une pluralité d'éléments en protubérance ou en creux par rapport à la surface de la rainure.

L'invention n'est pas limitée aux exemples décrits et représentés et diverses modifications peuvent y être apportées sans sortir de son cadre.

Ainsi, selon une autre variante de réalisation non limitative, les lamelles 7 de la **figure 5** peuvent être discontinues. Elles présentent une partie plane entre elles. Elles peuvent en outre présenter entre elles des différences de section. De plus, les lamelles peuvent posséder des courbures ou des angles, notamment dans leur longueur. Elles peuvent en outre, être de longueur variable.

Ainsi, selon une autre variante de réalisation, les ouvertures 11 peuvent avoir la forme circulaire, carrée, ou encore polygonales (par exemple hexagonales) et les cavités 12 correspondantes une forme de cylindres, de parallélépipèdes, ou encore de polygones. Avec ces deux dernières structures (carrée ou polygonale), il est possible d'organiser plus facilement les ouvertures 11 les unes par rapport aux autres de sorte à limiter la surface des zones intermédiaires 13 entre ces ouvertures. Avec de telles formes d'ouvertures, on peut arriver plus aisément à des taux conséquents d'occupation des ouvertures.

Ainsi, l'invention décrite présente notamment les avantages suivants :
- la texture 3 permet de masquer les lignes de niveau dans les rainures 21 ;
- la texture 3 (que ce soit avec des éléments en protubérance et/ou avec des éléments en creux) permet dans le même temps d'absorber la lumière et donc de donner un aspect plus noir aux rainures 21 par rapport au reste de la bande de roulement 2. On améliore ainsi le contraste des rainures 21 par rapport au reste de la bande de roulement ;
- La texture 3 permet d'obtenir un visuel au niveau des rainures 21, de type « velours », qui apporte un effet de contraste et de profondeur dans les rainures 21, de sorte qu'elles apparaissent plus profondes à l'oeil d'un observateur.

## Revendications

1. Bande de roulement (2) pour pneumatique (1), ladite bande de roulement comportant une surface de roulement (20) et une pluralité de rainures (21), au moins une rainure présentant, vue en coupe, une forme globalement ondulée avec des parties de rainures entièrement ouvertes (210) sur la surface de roulement (20) et des parties de rainure fermées (211) en tout ou partie sur ladite surface de roulement (20), **caractérisée en ce que** les parties de rainures ouvertes (210) comprennent une texture (3) faisant contraste dans la bande de roulement, la texture (3) comportant une pluralité d'éléments (6, 7, 8, 9, 10) en protubérance ou en creux par rapport à la surface de la rainure et **en ce que** la texture (3) est absente des parties de rainure fermées (211).

2. Bande de roulement selon la revendication 1, **caractérisée en ce que** au moins 30% des éléments en protubérance (6,7) de la texture (3) fait un angle α supérieur à 40° par rapport à un plan tangent à la surface de la rainure (21) et **en ce que** au plus 25% des éléments en protubérance (6,7) de la texture (3) fait un angle α inférieur à 20° par rapport au plan tangent.

3. Bande de roulement selon l'une des revendications 1 ou 2, **caractérisée en ce que** tout ou partie des éléments en protubérance sont des brins (6) répartis dans la texture (3) selon une densité au moins égale à un brin par millimètre carré (mm²), chaque brin ayant une section moyenne comprise entre 0,003 mm² et 1 mm².

4. Bande de roulement selon l'une quelconque des revendications 1 à 3, **caractérisée en ce que** tout ou partie des éléments en protubérance sont des lamelles (7) sensiblement parallèles entre elles, le pas des lamelles dans la texture étant au plus égal à 0,5 mm, chaque lamelle ayant une largeur moyenne comprise entre 0,03 mm et 0,25 mm.

5. Bande de roulement selon l'une quelconque des revendications 1 à 4, **caractérisée en ce que** tout ou partie des éléments en protubérance forme des parallélépipèdes (8) de côté (C) compris entre 0,05 mm et 0,5 mm, de hauteur (H) comprise entre 0,05 mm et 0,5 mm, la distance entre deux parallélépipèdes adjacents dans la texture étant comprise entre 0,05 mm et 0,5 mm.

6. Bande de roulement selon l'une quelconque des revendications 1 à 5, **caractérisée en ce que** les éléments en protubérance (9) présentent dans la texture (3) des formes et des distances entre éléments en protubérance variables.

7. Bande de roulement selon la revendication 1, **caractérisée en ce que** les éléments en creux (10) forment des ouvertures (11) sur la surface de la rainure (21) et la texture (3) comprend une pluralité d'ouvertures (11), ces ouvertures étant réparties dans la texture (3) selon une densité au moins égale à une ouverture par millimètre carré (mm²), ces ouvertures présentant des diamètres équivalents compris entre 0,03 mm et 1,2 mm.

8. Pneumatique (1) comprenant une bande de roulement (2) selon l'une quelconque des revendications 1 à 7.

## Patentansprüche

1. Laufstreifen (2) für einen Luftreifen (1), wobei der Laufstreifen eine Lauffläche (20) und eine Vielzahl von Rillen (21) umfasst, wobei mindestens eine Rille in der Schnittansicht eine insgesamt gewellte Form mit vollständig offenen Rillenteilen (210) auf der Lauffläche (20) und ganz oder teilweise geschlossenen Rillenteilen (211) auf der Lauffläche (20) aufweist, **dadurch gekennzeichnet, dass** die offenen Rillenteile (210) eine Struktur (3) umfassen, die einen Kontrast im Laufstreifen bildet, wobei die Struktur (3) eine Vielzahl von Elementen (6, 7, 8, 9, 10) umfasst, die in Bezug auf die Oberfläche der Rille vorspringen oder vertieft sind, und dadurch, dass die Struktur (3) in geschlossenen Rillenteilen (211) nicht vorhanden ist.

2. Laufstreifen nach Anspruch 1, **dadurch gekennzeichnet, dass** mindestens 30 % der vorspringenden Elemente (6, 7) der Struktur (3) einen Winkel α von mehr als 40° in Bezug auf eine Tangentialebene zur Oberfläche der Rille (21) bilden, und dadurch, dass höchstens 25 % der vorspringenden Elemente (6, 7) der Struktur (3) einen Winkel α von weniger als 20° in Bezug eine Tangentialebene bilden.

3. Laufstreifen nach einem der Ansprüche 1 oder 2, **dadurch gekennzeichnet, dass** alle oder ein Teil der vorspringenden Elemente Fasern (6) sind, die in der Struktur (3) mit einer Dichte von mindestens einer Faser je Quadratmillimeter (mm²) verteilt sind, wobei jede Faser einen mittleren Querschnitt zwischen 0,003 mm² und 1 mm² hat.

4. Laufstreifen nach einem der Ansprüche 1 bis 3, **dadurch gekennzeichnet, dass** alle oder ein Teil der vorspringenden Elemente Lamellen (7) sind, die im Wesentlichen parallel zueinander verlaufen, wobei die Schrittweite der Lamellen in der Struktur höchstens 0,5 mm beträgt, wobei jede Lamelle eine mittlere Breite zwischen 0,03 mm und 0,25 mm hat.

5. Laufstreifen nach einem der Ansprüche 1 bis 4, **dadurch gekennzeichnet, dass** alle oder ein Teil der vorspringenden Elemente Quader (8) mit einer Kantenlänge (C) zwischen 0,05 mm und 0,5 mm und einer Höhe (H) zwischen 0,05 mm und 0,5 mm bilden, wobei der Abstand zwischen zwei benachbarten Quadern in der Struktur zwischen 0,05 mm und 0,5 mm beträgt.

6. Laufstreifen nach einem der Ansprüche 1 bis 5, **dadurch gekennzeichnet, dass** die vorspringenden Elemente (9) in der Struktur (3) variable Formen und Abstände zwischen vorspringenden Elementen aufweisen.

7. Laufstreifen nach Anspruch 1, **dadurch gekennzeichnet, dass** die vertieften Elemente (10) Öffnungen (11) in der Oberfläche der Rille (21) bilden und die Struktur (3) eine Vielzahl von Öffnungen (11) umfasst, wobei diese Öffnungen in der Struktur (3) mit einer Dichte von mindestens einer Öffnung je Quadratmillimeter (mm²) verteilt sind, wobei diese Öffnungen äquivalente Durchmesser zwischen 0,03 mm und 1,2 mm aufweisen.

8. Luftreifen (1) mit einem Laufstreifen (2) nach einem der Ansprüche 1 bis 7.

## Claims

1. Tread (2) for a tyre (1), said tread having a tread surface (20) and a plurality of grooves (21), at least one groove having, in cross section, an undulating overall shape with entirely open groove parts (210) at the tread surface (20) and completely or partially closed groove parts (211) at said tread surface (20), **characterized in that** the open groove parts (210) comprise a contrasting texture (3) in the tread, the texture (3) having a plurality of elements (6, 7, 8, 9, 10) that protrude from or are recessed into the surface of the groove, and **in that** the texture (3) is absent from the closed groove parts (211).

2. Tread according to Claim 1, **characterized in that** at least 30% of the protruding elements (6, 7) of the texture (3) form an angle α of greater than 40° with respect to a plane tangent to the surface of the groove (21), and **in that** at most 25% of the protruding elements (6, 7) of the texture (3) form an angle α of less than 20° with respect to the tangent plane.

3. Tread according to either of Claims 1 and 2, **characterized in that** all or some of the protruding elements are strands (6) distributed through the texture (3) at a density at least equal to one strand per square millimetre (mm²), each strand having a mean cross section of between 0.003 mm² and 1 mm².

4. Tread according to any one of Claims 1 to 3, **characterized in that** all or some of the protruding elements are substantially mutually parallel lamellae (7), the spacing of the lamellae in the texture being at most equal to 0.5 mm, each lamella having a mean width of between 0.03 mm and 0.25 mm.

5. Tread according to any one of Claims 1 to 4, **characterized in that** all or some of the protruding elements form parallelepipeds (8) having a side length (C) of between 0.05 mm and 0.5 mm and a height (H) of between 0.05 mm and 0.5 mm, the distance between two adjacent parallelepipeds in the texture being between 0.05 mm and 0.5 mm.

6. Tread according to any one of Claims 1 to 5, **characterized in that** the protruding elements (9) have variable shapes and distances between protruding elements in the texture (3).

7. Tread according to Claim 1, **characterized in that** the recessed elements (10) form openings (11) in the surface of the groove (21) and the texture (3) comprises a plurality of openings (11), these openings being distributed through the texture (3) at a density at least equal to one opening per square millimetre (mm²), these openings having equivalent diameters of between 0.03 mm and 1.2 mm.

8. Tyre (1) comprising a tread (2) according to any one of Claims 1 to 7.
